# EUROPÄISCHE PATENTSCHRIFT

(11) **EP 3 455 930 B1**
(45) Veröffentlichungstag und Bekanntmachung des Hinweises auf die Patenterteilung: **18.11.2020**
(21) Anmeldenummer: 17723048.9
(22) Anmeldetag: 04.05.2017
(51) Int. Cl.: H02K 19/16, H02K 1/16, H02K 1/30, H02K 1/32, H02K 3/487, H02K 7/00, H02K 9/02, H02K 9/19, H02K 15/02

(54) **WASSERKRAFTGENERATOR UND VERFAHREN ZU DESSEN HERSTELLUNG UND BETRIEB**
WATER POWER GENERATOR AND METHOD OF MANUFACTURING AND OPERATING
GÉNÉRATEUR HYDRO-ÉLECTRIQUE ET PROCÉDÉ DE FABRICATION ET FONCTIONNEMENT

(30) Priorität: 09.05.2016 AT 504212016
(43) Veröffentlichungstag der Anmeldung: 20.03.2019
(73) Patentinhaber: Andritz Hydro GmbH, 1120 Wien (AT)
(72) Erfinder: NEUMAYER, Fritz, 8010 Graz (AT); HIMMELREICH, Mario, 8160 Weiz (AT); HARB, Walter, 8061 St. Radegund (AT)
(74) Vertreter: Tschinder, Thomas
(86) Internationale Anmeldenummer: PCT/EP2017/060616
(87) Internationale Veröffentlichungsnummer: WO 2017/194379

(56) Entgegenhaltungen:
- EP-A2- 0 414 129
- EP-A2- 0 736 953
- FR-A- 1 307 426
- JP-A- S62 225 141
- US-A1- 2007 096 584

## Beschreibung

Den Gegenstand dieser Erfindung bildet ein Wasserkraftgenerator, der als elektrische Synchronmaschine mit einem luftgekühlten Rotor und einem Stator ausgebildet ist, mit mindestens acht Pole am Rotor, die durch die Polwicklung gebildet werden.

Den Gegenstand dieser Erfindung bildet auch ein Verfahren zum Herstellen und zum Betreiben des erfindungsgemäßen Wasserkraftgenerators.

Wasserkraftgeneratoren müssen immer mit ausreichendem Abstand zu den kritischen Drehzahlen (biegekritische Drehzahlen) betrieben werden, vorzugsweise unterhalb der ersten kritischen Drehzahl.

Im Bereich der kritischen Drehzahl versetzen die Kräfte der rotierenden Unwucht ein Maschinenteil oder die ganze Maschine in Resonanzschwingungen. Dies kann zur Zerstörung des Generators führen. Die kritische Drehzahl wird im Wesentlichen durch die Lagerung, die Steifigkeit der rotierenden Teile und durch deren Masse bestimmt. Eine Vergrößerung der Rotormasse führt zur Herabsetzung der ersten kritischen Drehzahl.

Problematisch wird der Betrieb von sehr großen schnelllaufenden Wasserkraftgeneratoren. Durch die sehr große Rotormasse liegt die erste kritische Drehzahl vergleichsweise niedrig. Um nicht in den Bereich der Betriebsdrehzahl zu kommen, versucht man, die Masse des Rotors möglichst gering zu halten. Geringere Rotormassen bei gleicher Leistung erfordern eine sehr effiziente Kühlung, daher werden derartige Rotoren mit einer Wasserkühlung ausgestattet.

Eine Wasserkühlung ist jedoch im Vergleich zu einer einfachen Luftkühlung aufwändiger und teurer.

Die EP 0 414 129 A2 offenbart einen Wasserkraftgenerator mit einem Rotorkörper, bei dem das Blechpaket an Ringen bestehend aus dickem Stahlblech befestigt ist. Diese Ringe sind über einen Armstern mit der Zentralwelle verbunden.

Der Erfindung liegt daher die Aufgabe zugrunde, einen Wasserkraftgenerator bereitzustellen, der mit einer Luftkühlung für den Rotor ausgestattet werden kann und der dennoch für schnelllaufende Hochleistungsanlagen (z.B. im Bereich von über 500 MVA) geeignet ist.

Gelöst wird diese Aufgabe durch einen Wasserkraftgenerator gemäß Patentanspruch 1. Erfindungsgemäß weist der selbsttragende Rotorkörper keine Zentralwelle auf, sondern besteht aus mehreren miteinander verbundenen geschmiedeten Stahlringen, wobei jeder Stahlring Nuten zur Aufnahme der Rotorwicklung aufweist.

Der Rotorkörper ist erfindungsgemäß an seinen beiden Enden jeweils über ein Übergangsstück mit der Welle verschraubt.

Durch diese Bauweise ohne Zentralwelle wird einerseits die Rotormasse verringert und dadurch die erste kritische Drehzahl erhöht. Andererseits kann durch den Rotoraufbau über die geschmiedeten Stahlringe eine besonders hohe Steifigkeit des Rotorkörpers erreicht werden, durch die die erste biegekritische Drehzahl ebenfalls erhöht wird. Somit kann ein derartiger Wasserkraftgenerator trotz seiner hohen Leistung mit, für Wasserkraftgeneratoren verhältnismäßig hohen Drehzahlen, beispielsweise im Bereich von 400 bis 900 U/min, betrieben und der Rotor mit Luft gekühlt werden.

Vorzugsweise werden die einzelnen Stahlringe über in axialer Richtung (= parallel zur Rotationsachse) verlaufende Bolzen miteinander verbunden bzw. zusammengespannt. Die Stahlringe können auch mit Hilfe von Zentriersitzen zueinander zentriert bzw. ausgerichtet werden.

Es ist günstig, wenn die beiden Generatorwellen jeweils über ein Übergangsstück mit den Stahlringen bzw. dem Rotorkörper verbunden sind. Wobei sich die Übergangsstücke in axialer Richtung erstrecken, sodass sie in radialer Richtung nachgiebig sind. Die durch die Betriebstemperatur und vor allem durch die Fliehkräfte hervorgerufene Ausdehnung der Stahlringe wird dadurch ausgeglichen. Diese Übergangsstücke können eine glockenförmige, eine zylindrische oder eine konische Form aufweisen.

Der Aufbau über die Stahlringe bietet den Vorteil, dass in einfacher Weise radiale Kühlkanäle für die Kühlluft gebildet werden können, nämlich über Nuten bzw. Vertiefungen in den Kontaktflächen zwischen den Ringen.

Vorzugsweise hat der aus den Stahlringen gebildete Rotorkörper an den Nutgründen Kühlkanäle, die in axialer Richtung (parallel zur Rotationsachse) verlaufen. Die Kühlluft wird dann vorzugsweise über eine stirnseitige Öffnung ins Innere des Rotorkörpers zugeführt und von dort über die radialen Kühlkanäle weiter zu den an den Nutgründen verlaufenden Kanälen geleitet. Die Kühlluft kann dann über radiale Bohrungen in der Wicklung den Rotor verlassen. Dadurch kommt es zu einer guten Kühlung der Rotorwicklung.

Die axialen Kühlkanäle können entweder ununterbrochen durchgehend über die gesamte Länge des Rotorkörpers verlaufen oder aber auch in Längsrichtung unterteilt sein, so kann die Kühlluftverteilung optimal eingestellt werden.

Die Erfindung betrifft auch ein Verfahren zum Betreiben eines Wasserkraftgenerators nach einem der Ansprüche 1 bis 14, wobei der Wasserkraftgenerator unterhalb der ersten biegekritischen Drehzahl betrieben wird.

Die Nuten können bereits in die einzelnen Stahlringe eingearbeitet werden, bevor die Stahlringe zum Rotorkörper zusammengefügt werden.

Die fertig bearbeiteten Stahlringe können dann zum letztendlichen Betriebsort transportiert und dort erst zusammengefügt werden. Dies vereinfacht den Transport enorm.

Im Folgenden wird ein Ausführungsbeispiel der Erfindung anhand von Zeichnungen beschrieben. Es zeigen:
Fig. 1 einen schematischen Längsschnitt durch den erfindungsgemäßen Wasserkraftgenerator;
Fig. 2 einen schematischen Querschnitt durch den Rotor;
Fig. 3 einen Detailausschnitt des Rotors aus Fig. 2;
Fig. 4, Fig. 5 und Fig. 6 Detailausschnitte des Rotors aus Fig. 1;
Fig. 7 eine Ansicht des Rotors;

Gleiche Bezugszeichen in den einzelnen Figuren bezeichnen jeweils gleiche Anlagenteile.

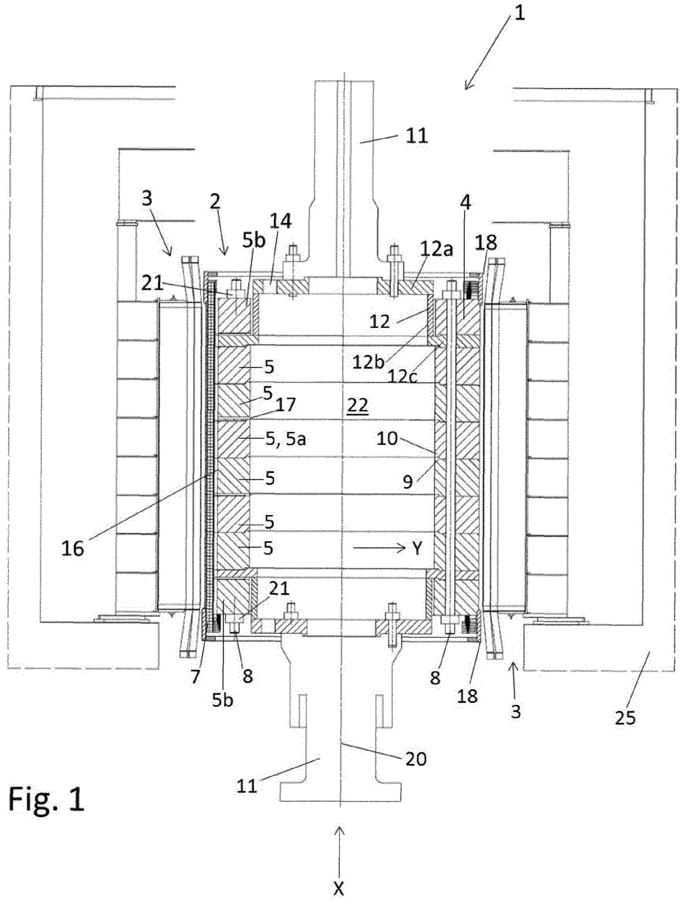

Figur 1 zeigt einen Schnitt entlang der Rotationsachse 20 durch ein Ausführungsbeispiel des erfindungsgemäßen Wasserkraftgenerators 1 ohne entsprechende Lager für die Welle 11.

Der senkrecht stehende Rotor 2 befindet sich innerhalb des Stators 3, welcher auf einem Fundament 25 ruht. Der Rotorkörper 4 wird aus einer Vielzahl von Stahlringen 5, 5a, 5b gebildet, die durch Gewindebolzen 8 und Muttern 21 zusammengespannt sind. Die einzelnen Stahlringe 5, 5a, 5b werden über Zentrierschultern 9, die in Ausnehmungen (Freistellungen) 10 eines benachbarten Stahlringes 5, 5a, 5b eingreifen, zueinander zentriert.

Außen am Rotorkörper 4 befinden sich in den Stahlringen 5, 5a, 5b Nuten 6 für die Rotorwicklung 7. Der Wickelkopf wird über die Wickelkopfabstützung (Rotorkappen) 18 stabilisiert.

Der Rotorkörper 4 ist an seinen beiden Enden jeweils über ein Übergangsstück 12 mit der Welle 11 verschraubt.

Das Übergangsstück 12 hat einen im Wesentlichen in radialer Richtung y verlaufenden Abschnitt 12a, der mit der Welle 11 verbunden ist. Außerdem besteht das Übergangsstück 12 aus einem zweiten in radialer Richtung y verlaufenden Abschnitt 12c, der zwischen den beiden äußeren Stahlringen 5 und 5b eingeklemmt ist und so die Verbindung des Übergangsstückes 12 mit den Stahlringen 5, 5a, 5b herstellt.

Zwischen den beiden radialen Abschnitten 5a und 5c befindet sich ein in axialer Richtung x verlaufender Abschnitt 5b des Übergangsstückes 12. Dieser zylinderförmige Abschnitt 12b ermöglicht eine gewisse Nachgiebigkeit in radialer Richtung y. Dadurch wird die Fliehkraftausdehnung und die Wärmeausdehnung des Rotorkörpers 4 im Betrieb ausgeglichen. Diese Ausdehnung kann durchaus im Bereich von mehreren Millimetern liegen.

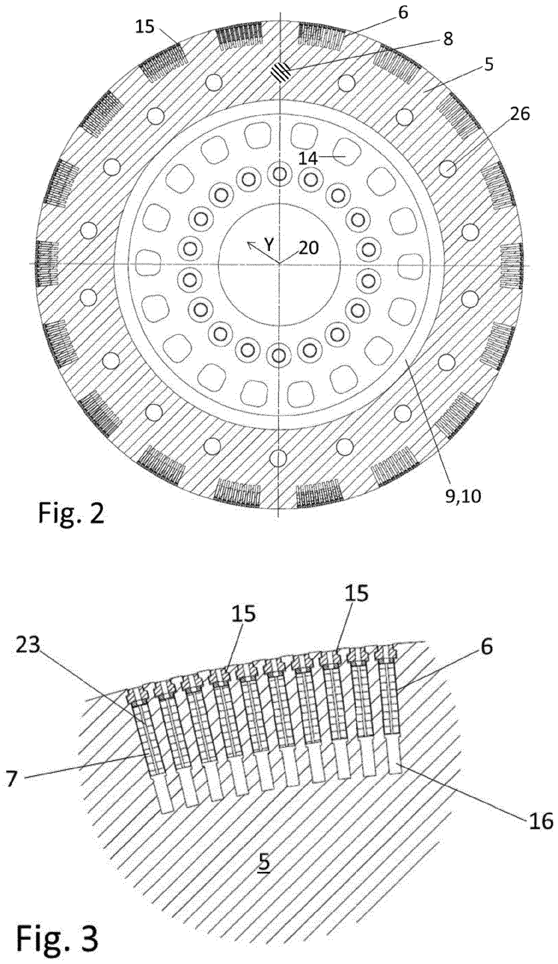

Über eine stirnseitige Öffnung 14 im Rotorkörper 4 (im Übergangsstück 12a) kann Kühlluft ins Rotorinnere 22 geführt werden. Diese Kühlluft gelangt über in radialer Richtung y verlaufende Kühlkanäle 17 in die in axialer Richtung x verlaufenden Nutgrundkanäle 16 und kühlt die Rotorwicklung 7 über radiale Kühlkanäle 23 (ersichtlich in Fig. 3) in der Wicklung 7.

Schlussendlich tritt die Kühlluft im Luftspalt aus dem Rotor 2 aus.

Figur 2 zeigt einen Schnitt durch den Rotor 2 eines 18 poligen Wasserkraftgenerators 1. Man erkennt gut die einzelnen Nuten 6 im Stahlring 5, sowie die Bohrungen 26 für die Aufnahme der Bolzen 8.

Figur 3 zeigt die Nuten 6 mit der eingelegten Wicklung 7 aus Figur 2 im Detail. Hier erkennt man die in axialer Richtung verlaufenden Kühlkanäle 16 am Nutgrund. Über radiale Kühlkanäle 23 in der Wicklung 7 und den Nutkeilen 15 kann die Kühlluft in den Luftspalt zwischen Rotor 2 und Stator 3 entweichen.

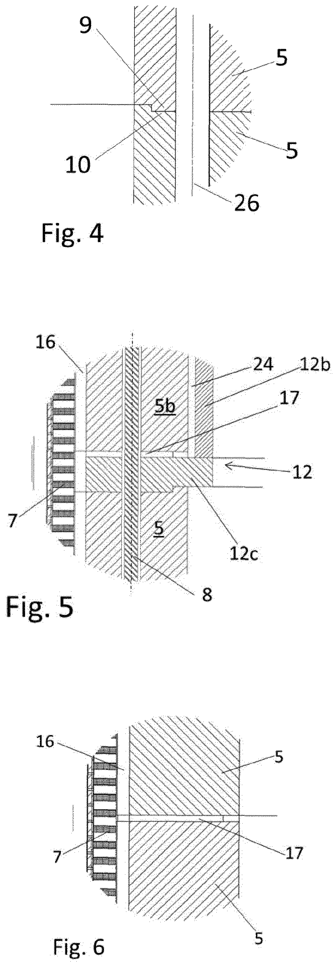

In Figur 4 ist der Zentriersitz zweier Stahlringe 5 zueinander dargestellt. Die ringförmige Zentrierschulter 9 des Stahlringes 5 greift in die Ausnehmung 10 eines benachbarten Stahlringes 5 ein.

Figur 5 zeigt die Anbindung des Übergangsstückes 12 an die Stahlringe 5 und 5b. Der in radialer Richtung y verlaufende Abschnitt 12c ist zwischen dem äußersten Stahlring 5b und dem Stahlring 5 durch die Bolzen 8 eingeklemmt. In diesem Bereich wird Kühlluft über den Ringspalt 24 zwischen dem äußeren Stahlring 5b und dem in axialer Richtung x verlaufenden Abschnitt 12b des Übergangsstückes 12 den radialen Kühlkanälen 17 zugeführt und gelangt so zu den axialen Kühlkanälen 16 am Nutgrund.

Figur 6 zeigt einen radialen Kühlkanal 17 zwischen zwei Stahlringen 5 im Rotorinneren 22. Diese Kühlkanäle 17 können über radiale Nuten in den Kontaktflächen der Stahlringe 5 gefertigt werden.

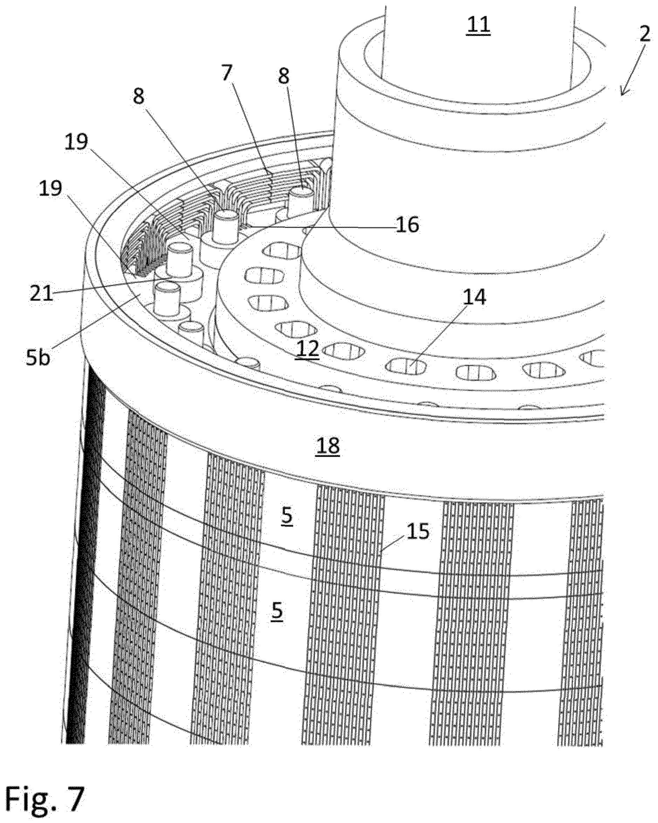

In Figur 7 erkennt man den Aufbau des Wickelkopfes, der durch die Rotorkappen 18 (Wickelkopfabstützung) stabilisiert wird. Die Rotorwicklung 7 bildet hier achtzehn Pole 19.

Da der erfindungsgemäße Aufbau speziell für sehr große und schwere Wasserkraftgeneratoren gedacht ist, werden die Nuten 6 vorzugsweise vor dem Zusammenbau der Stahlringe 5, 5a, 5b eingearbeitet, da dafür kleinere Bearbeitungsmaschinen benötigt werden.

## Patentansprüche

1. Wasserkraftgenerator(1), der als elektrische Synchronmaschine mit einem Stator (3) und einem luftgekühlten Rotor (2) ausgebildet ist, wobei am Rotor eine Polwicklung (7) mindestens acht Pole (19) bildet, **dadurch gekennzeichnet, dass** der selbsttragende Rotorkörper (4) keine Zentralwelle aufweist, sondern aus mehreren miteinander verbundenen geschmiedeten Stahlringen (5, 5a, 5b) besteht, wobei jeder Stahlring (5, 5a, 5b) Nuten (6) aufweist, in die die Rotorwicklung (7) direkt eingelegt ist und wobei der Rotorkörper (4) an seinen beiden Enden jeweils über ein Übergangsstück (12) mit einer Welle (11) verschraubt ist.

2. Wasserkraftgenerator (1) nach Anspruch 1, **dadurch gekennzeichnet, dass** die einzelnen Stahlringe (5, 5a, 5b) über in axialer Richtung (x) verlaufende Bolzen (8) miteinander verbunden sind.

3. Wasserkraftgenerator (1) nach Anspruch 1 oder 2, **dadurch gekennzeichnet, dass** die Stahlringe (5, 5a, 5b) Zentrierschultern (9) aufweisen, die jeweils in Ausnehmungen (10) eines benachbarten Stahlringes (5, 5a, 5b) eingreifen.

4. Wasserkraftgenerator (1) nach einem der Ansprüche 1 bis 3, **dadurch gekennzeichnet, dass** die Stahlringe (5a), die den Mittelteil des Rotorkörpers (4) bilden, einen anderen Innendurchmesser als die Stahlringe (5b) an den Rotorrandbereichen aufweisen, vorzugsweise sind die Innendurchmesser der Stahlringe (5a) im Mittelteil größer als die Innendurchmesser der Stahlringe (5b) in den Randbereichen.

5. Wasserkraftgenerator (1) nach einem der Ansprüche 1 bis 4, **dadurch gekennzeichnet, dass** die Stahlringe (5b) in den Randbereichen jeweils über ein Übergangsstück (12) mit einer Welle (11) verbunden sind, wobei sich die Übergangsstücke (12) in axialer Richtung (x) erstrecken, sodass sie in radialer Richtung (y) nachgiebig sind.

6. Wasserkraftgenerator (1) nach Anspruch 5, **dadurch gekennzeichnet, dass** die Übergangsstücke (12) glockenförmig ausgebildet sind.

7. Wasserkraftgenerator (1) nach Anspruch 5, **dadurch gekennzeichnet, dass** ein Abschnitt (12b) der Übergangsstücke (12) zylindrisch oder konisch ausgebildet ist.

8. Wasserkraftgenerator (1) nach einem der Ansprüche 5 bis 7, **dadurch gekennzeichnet, dass** die Übergangsstücke (12) jeweils zwischen zwei Stahlringen (5, 5b) befestigt sind.

9. Wasserkraftgenerator (1) nach einem der Ansprüche 1 bis 8, **dadurch gekennzeichnet, dass** der aus den Stahlringen (5, 5a, 5b) gebildete Rotorkörper (4) in radialer Richtung (y) verlaufende Kühlkanäle (17) aufweist.

10. Wasserkraftgenerator (1) nach Anspruch 9, **dadurch gekennzeichnet, dass** der aus den Stahlringen (5, 5a, 5b) gebildete Rotorkörper (4) bei eingebauter Rotorwicklung (7) an den Nutgründen in axialer Richtung (z) verlaufende Kühlkanäle (16) aufweist, wobei die radial verlaufenden Kühlkanäle (17) in die axial verlaufenden Kühlkanäle (16) münden.

11. Wasserkraftgenerator (1) nach Anspruch 10, **dadurch gekennzeichnet, dass** sich die axial verlaufenden Kühlkanäle (16) im Wesentlichen über die gesamte Nutenlänge erstrecken.

12. Wasserkraftgenerator (1) nach einem der Ansprüche 9 bis 11, **dadurch gekennzeichnet, dass** der Rotorkörper (4) vorzugsweise stirnseitig zumindest eine Öffnung (14) aufweist für die Zufuhr von Kühlluft ins Rotorinnere (22).

13. Wasserkraftgenerator (1) nach einem der Ansprüche 1 bis 12, **dadurch gekennzeichnet, dass** auch der Stator luftgekühlt ist.

14. Wasserkraftgenerator (1) nach einem der Ansprüche 1 bis 12, **dadurch gekennzeichnet, dass** der Stator wassergekühlt ist.

15. Verfahren zum Betreiben eines Wasserkraftgenerators (1) nach einem der Ansprüche 1 bis 14, **dadurch gekennzeichnet, dass** der Wasserkraftgenerator (1) unterhalb seiner ersten biegekritischen Drehzahl betrieben wird.

## Claims

1. Hydro generator (1) designed as an electrical, synchronous machine with a stator (3) and an air-cooled rotor (2), where a pole winding (7) on the rotor forms at least eight poles (19) **characterized in that** the self-supporting rotor body (4) does not have a central shaft, but consists of several forged steel rings (5, 5a, 5b) connected to one another, where each steel ring (5, 5a, 5b) has grooves into which the rotor winding (7) is directly placed and where the rotor body (4) is bolted at each of the two ends via a transition piece (12) to a shaft (11).

2. Hydro generator (1) according to Claim 1, **characterized in that** the individual steel rings (5, 5a, 5b) are connected to one another by means of bolts (8) running in axial direction (x).

3. Hydro generator (1) according to Claim 1 or 2, **characterized in that** the steel rings (5, 5a, 5b) have centring shoulders (9), each of which engage recesses (10) in an adjacent steel ring (5, 5a, 5b).

4. Hydro generator (1) according to one of Claims 1 to 3, **characterized in that** the steel rings (5a) that form the middle section of the rotor body (4) have a different inner diameter to the steel rings (5b) in the peripheral sections of the rotor, the inner diameter of the steel rings (5a) in the middle section preferably being larger than the inner diameter of the steel rings (5b) in the peripheral sections.

5. Hydro generator (1) according to one of Claims 1 to 4, **characterized in that** the steel rings (5b) in the peripheral sections are each connected to a shaft (11) via a transition piece (12), where the transition pieces (12) extend in axial direction (x) so that they yield in radial direction (y).

6. Hydro generator (1) according to Claim 5, **characterized in that** the transition pieces (12) are bell-shaped.

7. Hydro generator (1) according to Claim 5, **characterized in that** one section (12b) of the transition pieces (12) has a cylindrical or conical shape.

8. Hydro generator (1) according to one of Claims 5 to 7, **characterized in that** the transition pieces (12) are each secured between two steel rings (5, 5b).

9. Hydro generator (1) according to one of Claims 1 to 8, **characterized in that** the rotor body (4) formed by the steel rings (5, 5a, 5b) has cooling channels (17) running in radial direction (y).

10. Hydro generator (1) according to Claim 9, **characterized in that** the rotor body (4) formed by the steel rings (5, 5a, 5b) has cooling channels (16) running in axial direction (z) at the base of the grooves when the rotor winding (7) is installed, where the cooling channels (17) running in radial direction open into the cooling channels (16) running in axial direction.

11. Hydro generator (1) according to Claim 10, **characterized in that** the cooling channels (16) running in axial direction extend largely over the entire length of the grooves.

12. Hydro generator (1) according to one of Claims 9 to 11, **characterized in that** the rotor body (4) preferably has at least one opening (14) on the face end for supplying cooling air to the inside of the rotor (22).

13. Hydro generator (1) according to one of Claims 1 to 12, **characterized in that** the stator is also air-cooled.

14. Hydro generator (1) according to one of Claims 1 to 12, **characterized in that** the stator is water-cooled.

15. Method for operating a hydro generator (1) according to one of Claims 1 to 14, **characterized in that** the hydro generator (1) is operated below its first critical bending speed.

## Revendications

1. Générateur hydraulique (1), qui est conçu comme une machine synchrone électrique dotée d'un stator (3) et d'un rotor à refroidissement par air (2), sur le rotor un enroulement polaire (7) formant au moins huit pôles (19), **caractérisé en ce que** le corps de rotor autoportant (4) ne présente aucun arbre central mais est composé de plusieurs bagues en acier forgées reliées entre elles (5, 5a, 5b), chaque bague en acier (5, 5a, 5b) présentant des rainures (6), dans lesquelles est directement inséré l'enroulement de rotor (7), et le corps de rotor (4) est vissé sur chacune de ses deux extrémités par une pièce de transition (12) à un arbre (11).

2. Générateur hydraulique (1) selon la revendication 1, **caractérisé en ce que** chacune des bagues en acier (5, 5a, 5b) sont reliées par des boulons (8) partant dans la direction axiale (x).

3. Générateur hydraulique (1) selon la revendication 1 ou 2, **caractérisé en ce que** les bagues en acier (5, 5a, 5b) présentent des épaulements de centrage (9) qui se logent respectivement dans des évidements (10) d'une bague en acier adjacente (5, 5a, 5b).

4. Générateur hydraulique (1) selon l'une des revendications 1 à 3, **caractérisé en ce que** les bagues en acier (5a), qui forment la partie centrale du corps du rotor (4), présente un diamètre intérieur autre que celui des bagues en acier (5b) dans les zones marginales du rotor, de préférence le diamètre intérieur des bagues en acier (5a) dans la partie centrale est supérieur au diamètre intérieur des bagues en acier (5b) dans les zones marginales.

5. Générateur hydraulique (1) selon l'une des revendications 1 à 4, **caractérisé en ce que** les bagues en acier (5b) dans les zones marginales sont reliées chacune par une pièce de transition (12) à un arbre (11), les pièces de transition (12) s'étendant dans une direction axiale (x) de sorte qu'elles soient souples dans la direction radiale (y).

6. Générateur hydraulique (1) selon la revendication 5, **caractérisé en ce que** les pièces de transition (12) sont conçues en forme de cloche.

7. Générateur hydraulique (1) selon la revendication 5, **caractérisé en ce qu'**une section (12b) des pièces de transition (12) sont cylindriques ou coniques.

8. Générateur hydraulique (1) selon l'une des revendications 5 à 7, **caractérisé en ce que** les pièces de transition (12) sont fixées respectivement entre deux bagues en acier (5, 5b).

9. Générateur hydraulique (1) selon l'une des revendications 1 à 8, **caractérisé en ce que** le corps de rotor (4) formé par les bagues en acier (5, 5a, 5b) présente des canaux de refroidissement (17) s'étendant dans la direction radiale (y).

10. Générateur hydraulique (1) selon la revendication 9, **caractérisé en ce que** le corps de rotor (4) formé par les bagues en acier (5, 5a, 5b) présente, en cas d'enroulement de rotor encastré (7), sur le fond des rainures des canaux de refroidissement (16) s'étendant dans la direction axiale (z), les canaux de refroidissement (17) s'étendant radialement débouchant dans les canaux de refroidissement s'étendant axialement (16).

11. Générateur hydraulique (1) selon la revendication 10, **caractérisé en ce que** les canaux de refroidissement s'étendant axialement (16) s'étendent sensiblement sur toute la longueur de la rainure.

12. Générateur hydraulique (1) selon l'une des revendications 9 à 11, **caractérisé en ce que** le corps de rotor (4) présente de préférence sur sa face frontale au moins un orifice (14) pour acheminer l'air de refroidissement à l'intérieur (22) du rotor.

13. Générateur hydraulique (1) selon l'une des revendications 1 à 12, **caractérisé en ce que** le stator est également à refroidissement par air.

14. Générateur hydraulique (1) selon l'une des revendications 1 à 12, **caractérisé en ce que** le stator est à refroidissement par eau.

15. Procédé de fonctionnement d'un générateur hydraulique (1) selon l'une des revendications 1 à 14, **caractérisé en ce que** le générateur hydraulique (1) fonctionne en dessous de ses vitesses critiques de flexion.
